# EUROPEAN PATENT APPLICATION

(11) **EP 4 427 987 A1**
(43) Date of publication of application: **11.09.2024**
(21) Application number: 24161599.6
(22) Date of filing: 05.03.2024
(51) Int. Cl.: B60R 16/037, G06F 21/31

(54) **OBJECT RECOGNITION METHOD AND APPARATUS**

(30) Priority: 06.03.2023 CN 202310207821
(71) Applicant: NIO Software Technology (Shanghai) Co., Ltd., Shanghai (CN)
(72) Inventor: ZHAO, Hao, Minhang District, Shanghai (CN)
(74) Representative: Patentanwaltskanzlei WILHELM & BECK

(57) **Abstract**

The disclosure relates to an object recognition method and apparatus, a computer device, a storage medium, and a computer program product. The method includes: in response to a trigger signal for obtaining behavior data, obtaining and displaying interaction behavior information, where the interaction behavior information is used to prompt an object to be recognized of a vehicle to perform an interaction operation based on the interaction behavior information; receiving behavior data to be recognized of the object to be recognized, where the behavior data to be recognized includes behavior data generated when the object to be recognized performs the interaction operation; and determining, when the behavior data to be recognized matches preset behavior data, that the object to be recognized is recognized by the vehicle as an authorized object of the vehicle. This method can simplify the object recognition process and improve the recognition efficiency.

## Description

### TECHNICAL FIELD

The disclosure relates to the field of intelligent driving technologies, and in particular, to an object recognition method and apparatus, a computer device, and a storage medium.

### BACKGROUND

With the development of automobile intelligent technologies, vehicle cockpits gradually carry more functional needs of users. In some application scenarios, the functions performed by vehicle cockpits include functions associated with user identities, customized functions, and the like. In order to ensure user experience and information security, when these functions are performed, it is usually required to identify and verify a user identity. After the verification succeeds, related execution permissions are granted.

In a conventional technology, a user can enter a password or a verification code, or scan a QR code for identity recognition. However, this method requires the user to manually perform a cumbersome operating process, which is inefficient and has a poor user experience.

### SUMMARY

In view of this, it is necessary to address the above technical problems and provide an object recognition method and apparatus, a computer device, a storage medium, and a computer program product, which can simplify the process to improve the recognition efficiency.

According to a first aspect, an embodiment of the disclosure provides an object recognition method. The method includes:
in response to a trigger signal for obtaining behavior data, obtaining and displaying interaction behavior information, where the interaction behavior information is used to prompt an object to be recognized of a vehicle to perform an interaction operation based on the interaction behavior information;
receiving behavior data to be recognized of the object to be recognized, where the behavior data to be recognized includes behavior data generated when the object to be recognized performs the interaction operation; and
determining, when the behavior data to be recognized matches preset behavior data, that the object to be recognized is recognized by the vehicle as an authorized object of the vehicle, where the preset behavior data includes behavior data generated when at least one authorized object performs an interaction operation corresponding to at least one piece of preset interaction behavior information.

In one embodiment, the obtaining interaction behavior information includes:
obtaining at least one piece of interaction behavior information from the at least one piece of preset interaction behavior information.

In one embodiment, the behavior data to be recognized includes behavior data generated when the object to be recognized performs a plurality of interaction operations, and the obtaining and displaying interaction behavior information includes:
obtaining a plurality of pieces of interaction behavior information; and
displaying the plurality of pieces of interaction behavior information in a preset order to prompt the object to be recognized to perform the plurality of interaction operations in the preset order.

In one embodiment, the determining, when the behavior data to be recognized matches preset behavior data, that the object to be recognized is recognized by the vehicle includes:
determining a similarity between the behavior data to be recognized and the preset behavior data; and
if the similarity is greater than a preset threshold, determining that the object to be recognized is recognized by the vehicle as an authorized object of the vehicle.

In one embodiment, the preset behavior data includes behavior data generated when a plurality of authorized objects perform the interaction operation corresponding to the at least one piece of preset interaction behavior information, and the determining, when the behavior data to be recognized matches preset behavior data, that the object to be recognized is recognized by the vehicle includes:
obtaining the preset behavior data;
determining a similarity between behavior data corresponding to each authorized object whose behavior data is collected in the preset behavior data and the behavior data to be recognized, and obtaining a plurality of groups of similarity results; and
if a largest similarity result among the plurality of groups of similarity results is greater than a preset threshold, determining that the object to be recognized is recognized by the vehicle as an authorized object of the vehicle.

In one embodiment, after the determining that the object to be recognized is recognized by the vehicle, the method further includes:
determining a vehicle function that an authorized object corresponding to the largest similarity result has permission to use; and
authorizing the object to be recognized to use the vehicle function.

According to a second aspect, an embodiment of the disclosure further provides an object recognition apparatus. The apparatus includes:
an obtaining module configured to: in response to a trigger signal for obtaining behavior data, obtain and display interaction behavior information, where the interaction behavior information is used to prompt an object to be recognized of a vehicle to perform an interaction operation based on the interaction behavior information;
a receiving module configured to receive behavior data to be recognized of the object to be recognized, where the behavior data to be recognized includes behavior data generated when the object to be recognized performs the interaction operation; and
a determination module configured to determine, when the behavior data to be recognized matches preset behavior data, that the object to be recognized is recognized by the vehicle as an authorized object of the vehicle, where the preset behavior data includes behavior data generated when at least one authorized object performs an interaction operation corresponding to at least one piece of preset interaction behavior information.

In one embodiment, the obtaining module includes:
a first obtaining sub-module configured to obtain at least one piece of interaction behavior information from the at least one piece of preset interaction behavior information.

In one embodiment, the behavior data to be recognized includes behavior data generated when the object to be recognized performs a plurality of interaction operations, and the obtaining module includes:
a second obtaining sub-module configured to obtain a plurality of pieces of interaction behavior information; and
a display module configured to display the plurality of pieces of interaction behavior information in a preset order to prompt the object to be recognized to perform the plurality of interaction operations in the preset order.

In one embodiment, the determination module includes:
a first determination sub-module configured to determine a similarity between the behavior data to be recognized and the preset behavior data; and
a second determination sub-module configured to: if the similarity is greater than a preset threshold, determine that the object to be recognized is recognized by the vehicle as an authorized object of the vehicle.

In one embodiment, the preset behavior data includes behavior data generated when a plurality of authorized objects perform the interaction operation corresponding to the at least one piece of preset interaction behavior information, and the determination module includes:
a third obtaining sub-module configured to obtain the preset behavior data;
a third determination sub-module configured to determine a similarity between behavior data corresponding to each authorized object whose behavior data is collected in the preset behavior data and the behavior data to be recognized, and obtain a plurality of groups of similarity results; and
a fourth determination sub-module configured to: if a largest similarity result among the plurality of groups of similarity results is greater than a preset threshold, determine that the object to be recognized is recognized by the vehicle as an authorized object of the vehicle.

In one embodiment, after the fourth determination sub-module, the method further includes:
a fifth determination sub-module configured to determine a vehicle function that an authorized object corresponding to the largest similarity result has permission to use; and
an authorization module configured to authorize the object to be recognized to use the vehicle function.

According to a third aspect, an embodiment of the disclosure further provides a computer device. The computer device includes a memory and a processor. A computer program is stored in the memory. The processor, when executing the computer program, implements the steps of the method described in any embodiment of the disclosure.

According to a fourth aspect, an embodiment of the disclosure further provides a computer-readable storage medium. The computer-readable storage medium has a computer program stored thereon. The computer program, when executed by a processor, implements the steps of the method described in any embodiment of the disclosure.

According to a fifth aspect, an embodiment of the disclosure further provides a computer program product. The computer program product includes a computer program. The computer program, when executed by a processor, implements the steps of the method described in any embodiment of the disclosure.

In various embodiments of the subject matter disclosed herein, when object recognition is being performed, interaction behavior information is obtained and displayed in response to a trigger signal for obtaining behavior data. The object to be recognized performs the corresponding interaction operation after receiving the interaction behavior information, behavior data to be recognized of the object to be recognized is received, and whether the behavior data to be recognized matches the preset behavior data is determined. If the behavior data to be recognized matches the preset behavior data, it is determined that the object to be recognized is recognized by the vehicle, and the object to be recognized is recognized as an authorized object of the vehicle. In various aspects, the preset behavior data includes behavior data generated when at least one authorized object performs an interaction operation corresponding to at least one piece of preset interaction behavior information. As such, the subject matter disclosed herein realizes object recognition based on the preset behavior data and the interaction behavior information. The displaying of the interaction behavior information can prompt the object to be recognized to perform an interaction operation based on the interaction behavior information, so as to obtain behavior data corresponding to the interaction behavior information. Then, the obtained behavior data is compared with the preset behavior data to determine whether the object to be recognized can be recognized as an authorized object based on a matching between the behavior data to be recognized and the preset behavior data. In this way, an automatic object determination can be performed by using the behavior data generated when the object performs the interaction operation and matching such behavior data with the preset behavior data without requiring the object to be recognized to manually complete a cumbersome verification process for such recognition. The recognition systems and methods disclosed herein are less cumbersome and convenient, ensures the recognition accuracy, improves the recognition efficiency, and improves the user experience.

### BRIEF DESCRIPTION OF DRAWINGS

FIG. 1 is a schematic flowchart of an object recognition method according to an embodiment;
FIG. 2 is a schematic flowchart of an object recognition method according to an embodiment;
FIG. 3 is a schematic flowchart of an object recognition method according to an embodiment;
FIG. 4 is a schematic flowchart of an object recognition method according to an embodiment;
FIG. 5 is a schematic diagram of an object recognition system according to an embodiment;
FIG. 6 is a structural block diagram of an object recognition apparatus according to an embodiment; and
FIG. 7 is a diagram of an internal structure of a computer device according to an embodiment.

### DESCRIPTION OF EMBODIMENTS

In order to make the objective, technical solutions, and advantages of the embodiments of the disclosure clearer, the embodiments of the disclosure are further described in detail below with reference to the accompanying drawings and the embodiments. It should be understood that the specific embodiments described herein are merely used to explain the embodiments of the disclosure and are not intended to limit the embodiments of the disclosure.

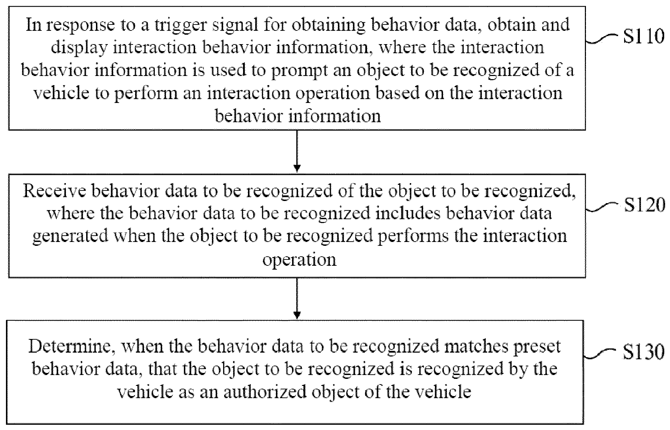

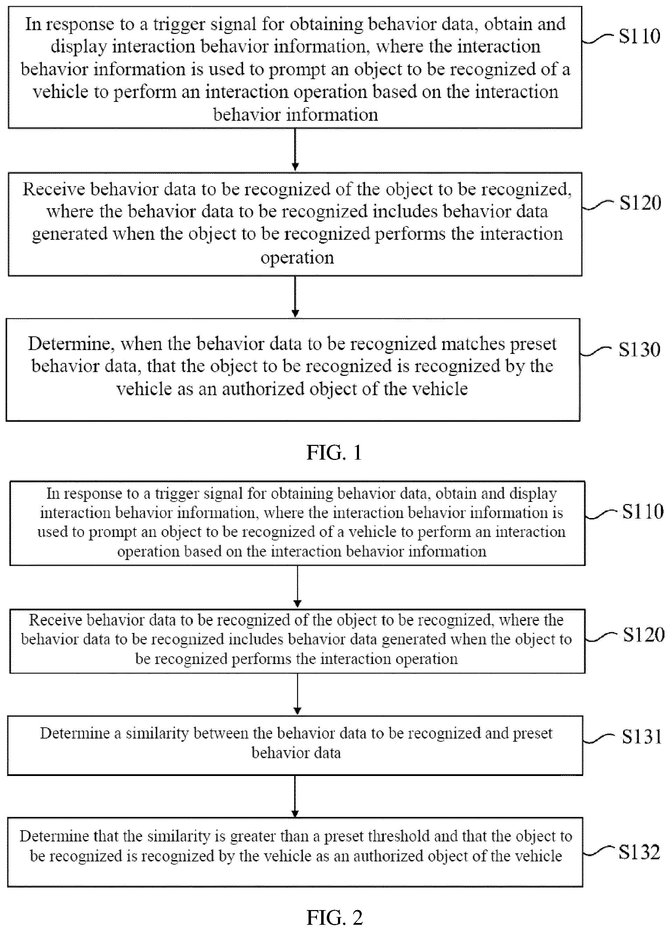

In one embodiment, as shown in FIG. 1, an object recognition method is provided, including the following steps:

In step S 110, in response to a trigger signal for obtaining behavior data, obtain and display interaction behavior information, where the interaction behavior information is used to prompt an object to be recognized of a vehicle to perform an interaction operation based on the interaction behavior information.

In various embodiments, an application scenario includes the vehicle, and the object to be recognized may include a user using the vehicle. When object recognition is being performed, interaction behavior information is obtained in response to a trigger signal for obtaining behavior data. The trigger signal for obtaining behavior data is usually set according to the actual application scenario. According to the actual application scenario, timing for object recognition is determined, and the trigger signal for obtaining behavior data is determined. For example, in one embodiment, when the user needs to use an identity-related usage function, the object clicking or selecting the related usage function can be used as a trigger signal for obtaining behavior data. When the object clicks or selects the related usage function, the interaction behavior information is obtained and a subsequent object recognition process is performed. In another example, object recognition may be alternatively performed directly when the user uses the vehicle. In this case, the trigger signal for obtaining behavior data may include but is not limited to the object opening a vehicle door, the object being on a vehicle seat, the object turning on an in-vehicle infotainment system, and another operation of the object using the vehicle. The above operations may be determined by sensors, image obtaining devices, and other devices installed on the vehicle. The interaction behavior information usually includes information corresponding to an interaction operation preset according to the actual application scenario. The interaction operation may include but is not limited to an interaction operation between the object and an intelligent terminal device in the vehicle, an interaction operation that the object can perform in the vehicle, etc. For example, the object puts on the intelligent terminal device in the vehicle; the object nods or shakes his or her head; the object wears the intelligent terminal device in the vehicle to complete actions such as sitting upright, lying completely on the backrest, sitting upright in a familiar relaxed posture, and moving to the next seat. The intelligent terminal device may include but is not limited to smart glasses and smart headphones. After the interaction behavior information is obtained, the interaction behavior information is displayed. Specifically, in various embodiments, the interaction behavior information may include but is not limited to text information, image information, voice information, etc. corresponding to the interaction operation. Methods for displaying the interaction behavior information may include but are not limited to broadcast voice playing, multimedia image displaying, multimedia text displaying, and other display methods that can be received by the object to be recognized. In some implementations, the methods for displaying the interaction behavior information may include but are not limited to outputting a corresponding signal to a terminal device in the vehicle for display. The terminal device may include but is not limited to AR smart glasses, a display, or a loudspeaker in the vehicle. The output corresponding signal may include a signal obtained by converting the interaction behavior information based on a type of the terminal device.

In step S120, receive behavior data to be recognized of the object to be recognized, where the behavior data to be recognized includes behavior data generated when the object to be recognized performs the interaction operation. In various embodiments, the behavior data to be recognized of the object to be recognized is received, and the behavior data to be recognized includes the behavior data generated when the object to be recognized performs the interaction operation corresponding to the interaction behavior information. Specifically, the interaction behavior information is displayed to prompt the object to be recognized to perform the interaction operation based on the interaction behavior information. When the object to be recognized performs the interaction operation, behavior data will be generated, and the generated behavior data is obtained as the behavior data to be recognized. Different interaction operations may correspond to different types of behavior data. For example, when the interaction operation includes the object wearing the intelligent terminal device, the generated behavior data may include relative position data between the intelligent terminal device and the vehicle when the object wears the intelligent terminal device, movement range data when the object wears the intelligent terminal device, etc. When the interaction operation includes the object performing a target action (such as nodding or shaking his or her head), the generated behavior data may include movement range data when the object performs the target action. Methods for obtaining the behavior data may include but are not limited to obtaining through sensors and obtaining through image obtaining devices. Depending on a type of the behavior data, the methods for obtaining the behavior data also vary. For example, when the obtained data includes relative position data between the intelligent terminal device and the vehicle, the behavior data may be obtained through position sensors installed on the intelligent terminal device and the vehicle; when the obtained data includes the movement range data when the object performs the target action, the behavior data may be obtained through a preset image obtaining device.

In step S130, when the behavior data to be recognized matches preset behavior data, determine that the object to be recognized is recognized by the vehicle as an authorized object of the vehicle, where the preset behavior data includes behavior data generated when at least one authorized object performs an interaction operation corresponding to at least one piece of preset interaction behavior information.

In various embodiments, after the behavior data to be recognized is obtained, the behavior data to be recognized is compared with the preset behavior data to determine whether the behavior data to be recognized matches the preset behavior data. When the behavior data to be recognized matches the preset behavior data, it is determined that the object to be recognized is recognized by the vehicle as an authorized object of the vehicle. The preset behavior data includes behavior data generated when at least one authorized object performs an interaction operation corresponding to at least one piece of preset interaction behavior information. The preset interaction behavior information may include but is not limited to interaction behavior information randomly selected from a preset interaction behavior information library, interaction behavior information corresponding to an interaction operation selected by the authorized object, and interaction behavior information preset according to the actual application scenario. The preset interaction behavior information may include but is not limited to text information, image information, voice information, etc., corresponding to a preset interaction operation. In one embodiment, one vehicle may correspond to one or more authorized objects. When one vehicle corresponds to a plurality of authorized objects, the preset behavior data may include a part or all of behavior data generated when the plurality of authorized objects perform interaction operations corresponding to the preset interaction behavior information. The authorized object may include the owner of the vehicle. To determine whether the data matches, a matching condition may be set based on features between the data. For example, when a data similarity is greater than a preset threshold, it may be considered that the data matches; when some feature fields of the data meet a preset condition, it may be considered that the data matches. In one embodiment, the preset behavior data may be collected in advance, and is obtained by collecting behavior data generated when the authorized object performs an interaction operation, and processing the collected behavior data. In one embodiment, when the behavior data to be recognized does not match the preset behavior data, it may be determined that the object to be recognized is not recognized. In one embodiment, after the object to be recognized is recognized by the vehicle, the object to be recognized may be authorized to use a related function of the vehicle. Different authorized objects may have different vehicle function permissions, and corresponding permissions can be performed based on an authorized object matching the behavior data to be recognized. In one implementation, recognition of an object may be set for user-identity-based functions, customized recommendation functions, etc. The corresponding functions can be used only after the object is recognized. In one embodiment, the user-identity-based functions may include, but are not limited to, functions of payments, deduction, and viewing sensitive information of a user (including sensitive information of a vehicle frame number, a license plate number, a mobile phone number of a vehicle owner, third-party accounts, etc.). The identity of the user needs to be verified before accessing such payments, deduction, and sensitive information viewing functions. The customized recommendation functions may include, but are not limited to, based on user's related history records of activities in the vehicle (for example, about entertainment, interaction, or work), customizing personalized recommendations for related features, and displaying some customized preset information (such as opening a document recently closed, opening the video watched last time and resuming its progress, and opening the archive of the game played last time).

In one embodiment, the preset behavior data includes behavior data collected in advance. Specifically, during collection, the preset interaction behavior information is obtained and displayed in response to a trigger signal for preset behavior data collection. The trigger signal for preset behavior data collection may be set according to the actual application scenario. For example, the trigger signal for preset behavior data collection may be set to an authorized object selecting a behavior data collection option on an in-vehicle infotainment system or a multimedia device. Methods for displaying the preset interaction behavior information may include but are not limited to broadcast voice playing, multimedia image displaying, multimedia text displaying, and other display methods that can be received by the object to be recognized. In some implementations, the methods for displaying the preset interaction behavior information may include but are not limited to outputting a corresponding signal to a terminal device in the vehicle for display. The terminal device may include but is not limited to AR smart glasses, a display, or a loudspeaker in the vehicle. The output corresponding signal may include a signal obtained by converting the preset interaction behavior information based on a type of the terminal device. The preset interaction behavior information is displayed to receive the preset behavior data of the authorized object by prompting the authorized object to perform the preset interaction operation based on the preset interaction behavior information. The preset behavior data includes behavior data generated when the authorized object performs the preset interaction operation. In one embodiment, the behavior data and the method for obtaining the behavior data may be as described in the embodiment corresponding to step S120. In one embodiment, there may be one or more authorized objects, and the preset behavior data may be updated as the data is collected. In one embodiment, the data initially collected may be raw data, and this raw data may be standardized (such as through data cleaning and/or normalization) to obtain the preset behavior data.

In one implementation, when the preset behavior data is being collected, a plurality of pieces of preset interaction behavior information are first obtained, and then behavior data that is generated when authorized objects perform a plurality of interaction operations may be collected. The plurality of pieces of preset interaction behavior information corresponding to the plurality of interaction operations are sequentially displayed based on a preset display order. This preset display order may be preset, randomly determined based on the plurality of interaction operations, determined based on the actual application scenario setting, or determined by other suitable methods. In one embodiment, data collection and information displaying may be corresponding to each other. That is, each time one piece of preset interaction behavior information is displayed, behavior data generated when an authorized object performs a corresponding interaction operation is collected. After this collection, a piece of preset interaction behavior information that is next in the preset order is displayed, and collection of behavior data generated when the authorized object performs an interaction operation corresponding to this next-in-order piece of preset interaction behavior information is performed, until collection of behavior data for the plurality of preset interaction operations is completed. In this way, the collection of the behavior data for the plurality of preset interaction operations can be implemented, ensuring the orderliness and effectiveness of behavior data collection, and avoiding the collection of invalid data caused by disorderly information displaying, thereby improving the efficiency and accuracy of data collection. In addition, by collecting the behavior data corresponding to the plurality of preset interaction operations, the matching of the behavior data for the plurality of interaction operations can be implemented in a subsequent object recognition process, thereby improving the accuracy of object recognition, reducing the possibility of information security risks caused by errors in recognition, guaranteeing the security of user information, and improving the user experience.

In various embodiments of the subject matter disclosed herein, when object recognition is being performed, interaction behavior information is obtained and displayed in response to a trigger signal for obtaining behavior data. The object to be recognized performs the corresponding interaction operation after receiving the interaction behavior information, behavior data to be recognized of the object to be recognized is received, and whether the behavior data to be recognized matches the preset behavior data is determined. If the behavior data to be recognized matches the preset behavior data, it is determined that the object to be recognized is recognized by the vehicle, and the object to be recognized is recognized as an authorized object of the vehicle. In various aspects, the preset behavior data includes behavior data generated when at least one authorized object performs an interaction operation corresponding to at least one piece of preset interaction behavior information. As such, the subject matter disclosed herein realizes object recognition based on the preset behavior data and the interaction behavior information. The displaying of the interaction behavior information can prompt the object to be recognized to perform an interaction operation based on the interaction behavior information, so as to obtain behavior data corresponding to the interaction behavior information. Then, the obtained behavior data is compared with the preset behavior data to determine whether the object to be recognized can be recognized as an authorized object based on a matching between the behavior data to be recognized and the preset behavior data. In this way, an automatic object determination can be performed by using the behavior data generated when the object performs the interaction operation and matching such behavior data with the preset behavior data without requiring the object to be recognized to manually complete a cumbersome verification process for such recognition. The recognition systems and methods disclosed herein are less cumbersome and convenient, ensures the recognition accuracy, improves the recognition efficiency, and improves the user experience.

In one embodiment, the step of obtaining interaction behavior information includes:
obtaining at least one piece of interaction behavior information from the at least one piece of preset interaction behavior information.

In various embodiments, when the interaction behavior information is being obtained, the at least one piece of interaction behavior information may be obtained from one piece of preset interaction behavior information or from a plurality of pieces of preset interaction behavior information. During recognition of an object, it is required to obtain interaction behavior information to perform subsequent object recognition. In various embodiments, the interaction behavior information is obtained from the preset interaction behavior information, and the preset interaction behavior information includes information used to prompt an authorized object to perform an interaction operation when preset behavior data is being collected.

In various embodiments, obtaining the interaction behavior information from the preset interaction behavior information makes a correspondence between the interaction operation performed by the object to be recognized and the interaction operation of the preset interaction behavior information. When obtaining the behavior data of the object to be recognized for later comparison, the correspondence may be used to determine whether the object to be recognized can be recognized through behavior data when the object to be recognized and an authorized object perform the same interaction operation. This ensures the reliability of the data comparison result, further improves the recognition accuracy and the recognition efficiency, and improves the user experience.

In one embodiment, the behavior data to be recognized includes behavior data generated when the object to be recognized performs a plurality of interaction operations. The step of obtaining and displaying interaction behavior information includes:
obtaining a plurality of pieces of interaction behavior information; and
displaying the plurality of pieces of interaction behavior information in a preset order to prompt the object to be recognized to perform the plurality of interaction operations in the preset order.

In various embodiments, the behavior data to be recognized includes behavior data generated when the object to be recognized performs a plurality of interaction operations. During collection of the behavior data to be recognized, when the object to be recognized performs a plurality of interaction operations, a plurality of pieces of interaction behavior information are obtained, and each piece of interaction behavior information corresponds to one interaction operation. In some implementations, number of pieces of the interaction behavior information that would need to be obtained can be determined based on the actual application scenario. Different application scenarios may have different recognition needs. For example, when the recognition need is to prioritize recognition efficiency, it may be set that one piece of interaction behavior information would need to be obtained to perform subsequent operation in order to improve the speed of recognition. When the recognition need is to prioritize recognition accuracy, it may be set that a plurality of pieces of interaction behavior information would need to be obtained to perform subsequent operation in order to increase an amount of behavior data to be recognized and improve the recognition accuracy. When a plurality of pieces of interaction behavior information are obtained, the object to be recognized performs a plurality of interaction operations. In various embodiments, the plurality of interaction behavior information are displayed in a preset order to prompt the object to be recognized to perform a plurality of interaction operations in the preset order. The preset order may be pre-determined based on the actual application scenario, determined randomly, or determined by other suitable methods. In various embodiments, the object to be recognized performs a plurality of interaction operations in the preset order. Therefore, the collected behavior data to be recognized also corresponds to behavior data in the preset order. In some implementations, if the behavior data to be recognized includes behavior data corresponding to a plurality of interaction operations, when the behavior data to be recognized matches the preset behavior data, the behavior data corresponding to the plurality of interaction operations all meet a matching condition, and when the order of the behavior data also corresponds to the preset order, it may be determined that the object to be recognized is recognized by the vehicle. In one embodiment, it may be determined that the object to be recognized is recognized by the vehicle as the authorized object only when the behavior data to be recognized matches behavior data generated when the same authorized object performs an interaction operation corresponding to at least one piece of preset interaction behavior information. In one embodiment, data collection and information displaying may be corresponding to each other. That is, each time one piece of interaction behavior information is displayed, behavior data generated when the object to be recognized performs a corresponding interaction operation is collected. After this collection, a piece of interaction behavior information that is next in the preset order is displayed, and collection of behavior data generated when the object to be recognized performs an interaction operation corresponding to this next-in-order piece of preset interaction behavior information is performed, until collection of behavior data for the plurality of interaction operations is completed.

In various embodiments, the plurality of pieces of interaction behavior information are displayed in the preset order to collect the behavior data generated when the object to be recognized performs the plurality of interaction operations, thereby increasing the amount of behavior data to be recognized for the subsequent data comparison and matching process, and streamlining the matching process. This further improves the accuracy of object recognition, reduces the possibility of information security risks caused by errors in recognition, guarantees the security of user information, and improves the user experience.

In one embodiment, as shown in FIG. 2, the step of determining, when the behavior data to be recognized matches preset behavior data, that the object to be recognized is recognized by the vehicle includes the following steps:
In step S131, determine a similarity between the behavior data to be recognized and the preset behavior data.
In step S132, determine the similarity is greater than a preset threshold and that the object to be recognized is recognized by the vehicle as an authorized object of the vehicle.

In various embodiments, after the behavior data to be recognized is obtained, the similarity between the behavior data to be recognized and the preset behavior data is determined. The similarity between data may be determined through cosine similarity, Euclidean distance, etc. In various aspects, the higher the similarity between the behavior data to be recognized and the preset behavior data, the greater possibility that the object to be recognized is an authorized object. When the similarity is greater than the preset threshold, the object to be recognized is recognized by the vehicle. In some aspects, the preset threshold is set to be a value indicating a similarity that is appropriate for a certain actual application scenario. Such a similarity may be set at a high value to ensure the object recognition accuracy. When the similarity between the behavior data to be recognized and the preset behavior data is greater than the preset threshold, the behavior data to be recognized matches the preset behavior data and the object to be recognized is recognized. In one embodiment, the behavior data to be recognized may include a plurality of groups of sub-data to be recognized. During recognition, a subsimilarity between each group of sub-data to be recognized and corresponding sub-data in the preset behavior data may be calculated. The similarity between the behavior data to be recognized and the preset behavior data may be calculated based on a plurality of groups of sub-similarities obtained. For example, the sum of the plurality of groups of sub-similarities may be directly used as the similarity between the behavior data to be recognized and the preset behavior data. For another example, different weights may be allocated to different sub-data groups based on different types of sub-data to be recognized or based on other different characteristics of the sub-data to be recognized, and the weighted sum of the plurality of groups of sub-similarities may be used as the similarity between the behavior data to be recognized and the preset behavior data. The disclosure does not limit this.

In various embodiments, by determining whether the behavior data to be recognized matches the preset behavior data based on the similarity between the two, an association relationship between the behavior data to be recognized and the preset behavior data can be accurately determined for performing the object recognition. Such determination based on the similarity between the data provides an easy-to-implement way for object recognition, simplifies the object recognition process, ensures the recognition accuracy, improves the object recognition efficiency, and improves the user experience.

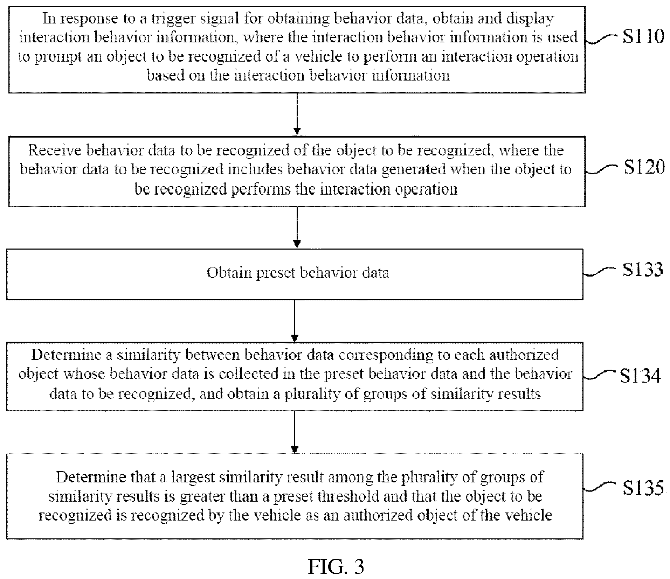

In one embodiment, as shown in FIG. 3, the preset behavior data includes behavior data generated when a plurality of authorized objects perform the interaction operation corresponding to the at least one piece of preset interaction behavior information. The step of determining, when the behavior data to be recognized matches preset behavior data, that the object to be recognized is recognized by the vehicle includes the following steps:
In step S133, obtain preset behavior data.
In step S 134, determine a similarity between behavior data corresponding to each authorized object whose behavior data is collected in the preset behavior data and the behavior data to be recognized, and obtain a plurality of groups of similarity results.
In step S135, determine that a largest similarity result among the plurality of groups of similarity results is greater than a preset threshold and that the object to be recognized is recognized by the vehicle as an authorized object of the vehicle.

In various embodiments, when there are a plurality of authorized objects for a vehicle, the preset behavior data may include behavior data generated when a plurality of authorized objects perform the interaction operation corresponding to the at least one piece of preset interaction behavior information. When object recognition is being performed, after the behavior data to be recognized is obtained, the preset behavior data is obtained. A similarity between behavior data corresponding to each authorized object whose behavior data is collected in the preset behavior data and the behavior data to be recognized may be calculated by any similarity calculation methods as described above or other suitable calculation methods to obtain the plurality of groups of similarity results. In various aspects, a greater similarity between behavior data corresponding to one of the authorized objects whose behavior data is collected in the preset behavior data and the behavior data to be recognized indicates a greater possibility that the object to be recognized matches the authorized object. In this way, when the largest similarity result among the plurality of groups of similarity results is greater than the preset threshold, the object to be recognized is recognized by the vehicle as an authorized object of the vehicle. The preset threshold is set to be a group of values indicating similarities that are appropriate for a certain actual application scenario. Such similarities may be set at high values to ensure the object recognition accuracy.

As described above, recognition of an object in a scenario where one vehicle corresponds to a plurality of authorized objects can be implemented. Behavior data that best meets the matching condition can be determined by determining the similarities between a plurality of groups of behavior data corresponding to the plurality of authorized objects and the behavior data to be recognized, thereby determining whether the object to be recognized can be recognized by the vehicle as an authorized object. The systems and methods disclosed herein can be used for object recognition in other application scenarios. In addition, comparing and matching with a plurality of groups of preset behavior data ensures the recognition accuracy, guarantees the security of user information, and improves the user experience.

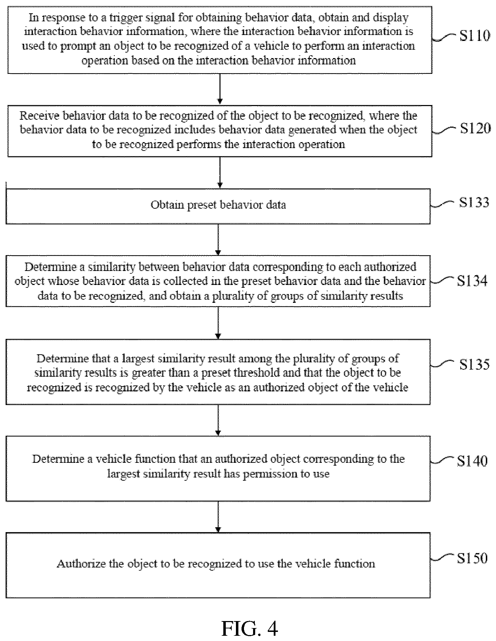

In one embodiment, as shown in FIG. 4, after the determining that the object to be recognized is recognized by the vehicle, the method further includes the following steps:
In step S140, determine a vehicle function that an authorized object corresponding to the largest similarity result has permission to use.
In step S150, authorize the object to be recognized to use the vehicle function.

In various embodiments, different authorized objects may have different vehicle function permissions. During recognition of an object, when the object is recognized by the vehicle, the object's permission to use certain vehicle functions is determined by the matching result. Specifically, when the behavior data to be recognized of the object matches the preset behavior data, the identity of the authorized object corresponding to the largest similarity result is determined, the object's permissions to use a certain vehicle function are determined based on information about the authorized object, and the object is authorized to access the vehicle function in the same manner as the authorized object. In one embodiment, the vehicle function may include using the vehicle, using an intelligent terminal device of the vehicle, customized functions, functions that may be associated with identity of the user, etc. In one embodiment, the vehicle function may include a passive usage function and/or an active usage function. When authorizing the object to be recognized to access the vehicle function, if the vehicle function corresponds to the passive usage function, the access to such a vehicle function can be opened to the object to be recognized, and the object to be recognized may choose to use the function based on needs. If the vehicle function corresponds to the active usage function, such a vehicle function can be enabled directly for the object to be recognized to access, without the need for the object to be recognized to manually enable it.

As described above, when the behavior data to be recognized matches the preset behavior data, permissions of an object to be recognized to access a vehicle function can be determined by the vehicle function permissions of the authorized object with the largest similarity result. In scenarios where the vehicle has a plurality of authorized objects with different vehicle function permissions, such object recognition can be used in application scenarios where accurate object recognition would be required to recognize object to be recognized and grant recognized objects with different access. For an application scenario where a plurality of users are present in one vehicle, such object recognition realizes object-based vehicle function access control, thereby improving the security of user information and user experience.

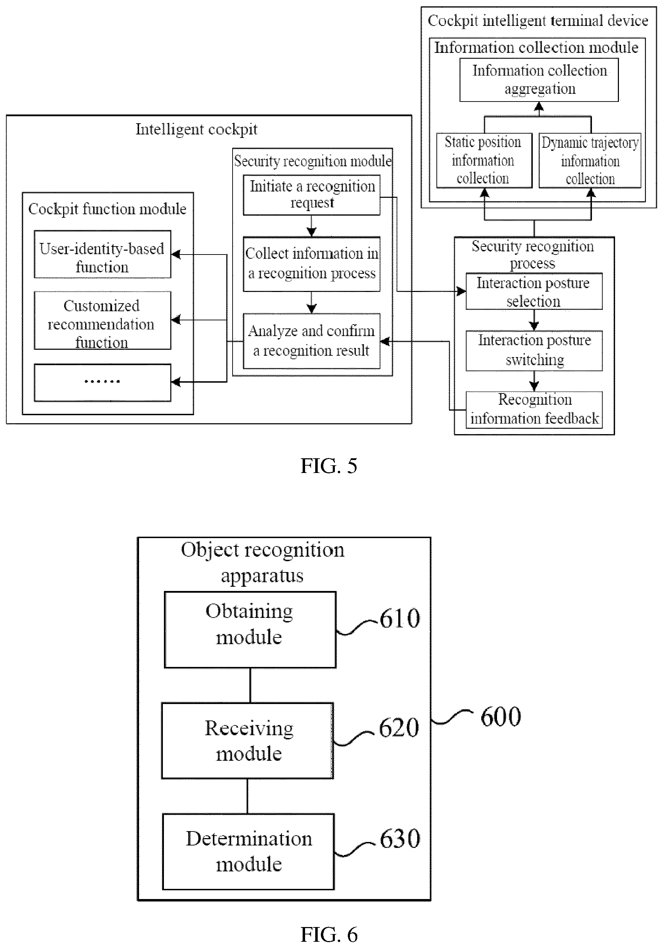

FIG. 5 is a schematic diagram of an object recognition system according to an exemplary embodiment. The object recognition system may be used in a vehicle. As shown in FIG. 5, the vehicle may include an intelligent cockpit and a cockpit intelligent terminal device. In one embodiment, the intelligent terminal device may include smart glasses. As shown, the intelligent cockpit may include a cockpit function module and a security recognition module. The cockpit function module includes functional components related to the intelligent cockpit of the vehicle. In one embodiment, the cockpit function module may include, but is not limited to, functional components for using user-identity-based functions and functional modules for using customized recommendation functions. The user-identity-based functions may include, but are not limited to, functions of payments, deduction, and viewing sensitive information of a user (including sensitive information of a vehicle frame number, a license plate number, a mobile phone number of a vehicle owner, third-party accounts, etc.). The identity of the user needs to be verified before accessing such payments, deduction, and sensitive information viewing functions. The customized recommendation functions may include, but are not limited to, based on user's related history records of activities in the vehicle (for example, about entertainment, interaction, or work), customizing personalized recommendations for related features, and displaying some customized preset information (such as opening a document recently closed, opening the video watched last time and resuming its progress, and opening the archive of the game played last time). The security recognition module is used for object recognition. Functions of the security recognition module include obtain and recognition of the behavior data to be recognized, collection of preset behavior data, and the like. The security recognition module initiates a recognition request, collects related information and data in a recognition process, confirms a recognition result, interacts with the cockpit function module, and so on. In various embodiments, the behavior data includes position data and movement range data when the object wears the intelligent terminal device. The intelligent terminal device module includes an information collection module. The information collection module includes a static position information collection module and a dynamic trajectory information collection module. The static position information collection module collects static relative position data when the object wears the intelligent terminal device in the vehicle. The dynamic trajectory information collection module collects relative position data of dynamic movement of the object when the object wears the intelligent terminal device in the vehicle.

In one embodiment, collection of the preset behavior data of an authorized object is set to be performed when the authorized object uses the object recognition system for the first time. When a passenger uses the object recognition system for the first time, the passenger enters information, which is the collection of preset behavior data. Here, the passenger is a passenger who can be recognized by the vehicle. The manner of entering information by the passenger includes the object recognition system randomly proposing several actions and guiding the user to follow the prompts to wear the intelligent terminal device in the cockpit and make corresponding actions. In one embodiment, the actions may include but are not limited to: sitting upright, lying completely on the backrest, sitting upright in a familiar relaxed posture, and moving to the next seat (optional as this movement depends on whether the vehicle is in a traveling state, and it is only applicable when the vehicle is in a non-traveling state). When the person completes the actions, the information collection module collects data. After the person completes the actions, the information entries are completed.

In one embodiment, information is being collected during the process of information entry by a user (collection of preset behavior data) and subsequent recognition and comparison. Static position information collection includes a spatial information collection module for collecting a wearing position of the intelligent terminal device. Specifically, the spatial information collection module collects spatial relative position data (for example, corresponding x, y, z relative coordinates in a Cartesian coordinate system) indicating positions of the intelligent terminal device and the cockpit in space relative to each other after the passenger wears the intelligent terminal device in the vehicle. The spatial relative position data can reflect a height and sitting posture information of the passenger when the passenger is in different postures. In various aspects, the spatial relative position data is relatively fixed for each passenger. In one embodiment, the above data collection process is dynamic, that is, when object recognition is being performed, collection is performed at regular intervals, and each collection item forms one single-dimensional array with a length of N (N is the number of collections, and in some aspects, collection is performed 10 times per minute). Dynamic trajectory information collection includes collecting movement range data of the intelligent terminal device when the passenger wears the intelligent terminal device and performs actions. In some aspects, the intelligent terminal device may be smart glasses, and the maximum movement range data (for example, corresponding to two values including maximum and minimum values in each direction of three directions x, y, and z in a Cartesian coordinate system) of the smart glasses in all directions when the smart glasses are being worn by the passenger in comparison to their original positions is collected.

During object recognition, when an object to be recognized wearing an intelligent terminal device needs to be recognized, the object recognition system may display the same action postures and prompt the object to be recognized to act in those postures, and collect related information in the process.

After the collection of data is completed, object recognition is performed by comparing the data and determining the comparison result. After information is obtained from each information collection module, one or more features are extracted from the information, and are matched with information initially entered by the authorized object. If the matching is successful, identification is successful and the object is recognized. If the matching fails, identity verification fails.

In one embodiment, the received multi-dimensional data is first normalized, and all feature values are mapped to a range between 0 and 1. The multi-dimensional array is split into a plurality of single-dimensional arrays, and each array represents all information points in one collection item. A Euclidean distance between the array of the collection item and a same array of a collection item of the authorized object is calculated to obtain a distance value N. A distance value calculated for each collection point is added to obtain a distance sum M between all feature information collected from the object to be recognized and feature information of an authorized object (a larger M represents a larger difference between features of each dimension of the two objects and thereby a lower similarity between the two objects). If the M value is less than a matching threshold, then the matching is successful and the object is recognized. If the M value is still greater than the matching threshold, the identity verification fails.

The object recognition systems and methods disclosed herein provide a fast and concise object recognition process based on the behavior data of the object when the object wears the intelligent terminal device, thereby improving the user experience.

It should be understood that although the steps in the flowcharts in the accompanying drawings are shown in sequence as indicated by the arrows, these steps are not necessarily executed in the order indicated by the arrows. Unless explicitly stated herein, there is no order restriction on the execution of these steps, and these steps can be executed in other orders. Moreover, at least some of the steps in the accompanying drawings may include a plurality of steps or stages. These steps or stages are not necessarily executed at the same time, but may be executed at different times. The execution order of these steps or stages is not necessarily sequential, but they may be executed in turn or alternately with other steps or at least some of the steps or stages in other steps.

An embodiment of the disclosure further provides an object recognition apparatus for implementing the object recognition methods described above. The solution to the problem provided by the apparatus is similar to the solution described in the above methods. Therefore, various embodiments of the object recognition apparatus will be described below with reference to the above descriptions of the object recognition methods with certain elements not described in detail or will be omitted so as not to obscure the relevant details of the descriptions herein.

In one embodiment, as shown in FIG. 6, an object recognition apparatus 600 is provided, including:
an obtaining module 610 configured to: in response to a trigger signal for obtaining behavior data, obtain and display interaction behavior information, where the interaction behavior information is used to prompt an object to be recognized of a vehicle to perform an interaction operation based on the interaction behavior information;
a receiving module 620 configured to receive behavior data to be recognized of the object to be recognized, where the behavior data to be recognized includes behavior data generated when the object to be recognized performs the interaction operation; and
a determination module 630 configured to determine, when the behavior data to be recognized matches preset behavior data, that the object to be recognized is recognized by the vehicle as an authorized object of the vehicle, where the preset behavior data includes behavior data generated when at least one authorized object performs an interaction operation corresponding to at least one piece of preset interaction behavior information.

In one embodiment, the obtaining module includes:
a first obtaining sub-module configured to obtain at least one piece of interaction behavior information from the at least one piece of preset interaction behavior information.

In one embodiment, the behavior data to be recognized includes behavior data generated when the object to be recognized performs a plurality of interaction operations, and the obtaining module includes:
a second obtaining sub-module configured to obtain a plurality of pieces of interaction behavior information; and
a display module configured to display the plurality of pieces of interaction behavior information in a preset order to prompt the object to be recognized to perform the plurality of interaction operations in the preset order.

In one embodiment, the determination module includes:
a first determination sub-module configured to determine a similarity between the behavior data to be recognized and the preset behavior data; and
a second determination sub-module configured to: if the similarity is greater than a preset threshold, determine that the object to be recognized is recognized by the vehicle as an authorized object of the vehicle.

In one embodiment, the preset behavior data includes behavior data generated when a plurality of authorized objects perform the interaction operation corresponding to the at least one piece of preset interaction behavior information, and the determination module includes:
a third obtaining sub-module configured to obtain the preset behavior data;
a third determination sub-module configured to determine a similarity between behavior data corresponding to each authorized object whose behavior data is collected in the preset behavior data and the behavior data to be recognized, and obtain a plurality of groups of similarity results; and
a fourth determination sub-module configured to: if a largest similarity result among the plurality of groups of similarity results is greater than a preset threshold, determine that the object to be recognized is recognized by the vehicle as an authorized object of the vehicle.

In one embodiment, after the fourth determination sub-module, the method further includes:
a fifth determination sub-module configured to determine a vehicle function that an authorized object corresponding to the largest similarity result has permission to use; and
an authorization module configured to authorize the object to be recognized to use the vehicle function.

All or some of the modules in the object recognition systems and methods described above can be implemented by software, hardware and a combination thereof. Each of the modules described above may be embedded in or independent of a processor of a computer device in the form of hardware, or may be stored in a memory of the computer device in the form of software, so that the processor can call and execute the operations corresponding to the modules described above.

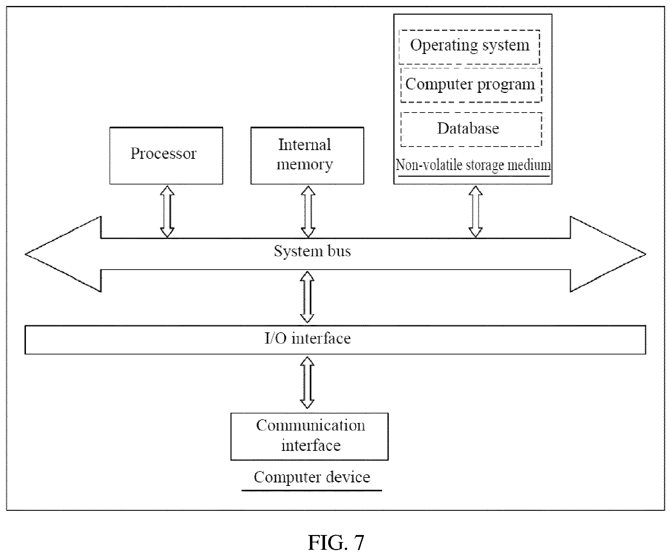

In one embodiment, a computer device is provided, which may be a server, and the diagram of its internal structure may be shown in FIG. 7. The computer device includes a processor, a memory, and a network interface connected through a system bus. The processor of the computer device is configured to provide computing and control capabilities. The memory of the computer device includes a non-volatile storage medium and an internal memory. The non-volatile storage medium stores an operating system, a computer program and a database. The internal memory provides an environment for the operation of the operating system and the computer program in non-volatile storage medium. The database of the computer device is configured to store behavior data to be recognized, preset behavior data, etc. The network interface of the computer device is configured to communicate with an external terminal through a network connection. The computer program, when executed by a processor, implements an object recognition method.

Those skilled in the art can understand that the structure shown in FIG. 7 is only a block diagram of a partial structure related to the solution of the embodiments of the disclosure, and does not constitute a limitation on the computer device to which the solution of the embodiments of the disclosure is applied. A computer device may include more or fewer components than shown, or have some components combined, or have a different arrangement of components.

In one embodiment, a computer device is further provided, including a memory and a processor. A computer program is stored in the memory. The processor, when executing the computer program, implements the steps of the above method embodiments.

In one embodiment, a computer-readable storage medium is provided, having a computer program stored thereon. The computer program, when executed by a processor, implements the steps of the above method embodiments.

In one embodiment, a computer program product is provided, including a computer program. The computer program, when executed by a processor, implements the steps of the above method embodiments.

It should be noted that both user information (including but not limited to user device information, user personal information, object information of an object to be recognized, object information of an object recognized by a vehicle, interaction behavior information, and preset interaction behavior information) and data (including but not limited to data used for analysis, stored data, displayed data, behavior data of an object, and preset behavior data) involved in the embodiments of the disclosure are information and data authorized by the user or fully authorized by all parties. Actions such as data collection and obtaining involved in the embodiments of the disclosure are all performed with the authorization of the user and the object, or after being fully authorized by all parties.

Those of ordinary skill in the art would be able to understand that implementation of all or some of the methods described above could be achieved by hardware commanded by a computer program, which computer program can be stored in a non-volatile computer-readable storage medium and when executed, carry out a procedure as shown in the embodiments of the methods described above. Any reference to the memory, the database or other media used in the embodiments provided in the embodiments of the disclosure may include at least one of non-volatile and volatile memories. The non-volatile memory may include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phase change memory (PCM), a graphene memory, etc. The volatile memory may include a random access memory ( RAM), an external cache memory, etc. As an illustration and not a limitation, RAM may be in various forms, such as a static random access memory (SRAM) or a dynamic random access memory (DRAM). The database involved in the various embodiments provided in the embodiments of the disclosure may include at least one of a relational database and a non-relational database. The non-relational database may include a blockchain-based distributed database, etc., but is not limited thereto. The processor involved in the various embodiments provided in the embodiments of the disclosure may be a generalpurpose processor, a central processing unit, a graphics processor, a digital signal processor, a programmable logic device, a quantum computing-based data processing logic device, etc., but is not limited thereto.

The technical features of the above embodiments can be combined in any manner, and in order to simplify the description, not all possible combinations of the technical features of the above embodiments are described. However, as long as there is no conflict between the combinations of these technical features, they should be considered to be within the scope of the description in the disclosure.

The embodiments described above merely illustrate several implementations of the embodiments of the disclosure and are described relatively specifically and in detail, but should not be construed as limiting the patent scope of the embodiments of the disclosure. It should be noted that several variations and improvements may also be made by those of ordinary skill in the art without departing from the concept of the embodiments of the disclosure, and should fall within the scope of protection of the embodiments of the disclosure. Therefore, the scope of protection of the embodiments of the disclosure shall be subject to the appended claims.

## Claims

1. An object recognition method, wherein the method comprises:
in response to a trigger signal for obtaining behavior data, obtaining and displaying interaction behavior information, wherein the interaction behavior information is used to prompt an object to be recognized of a vehicle to perform an interaction operation based on the interaction behavior information;
receiving behavior data to be recognized of the object to be recognized, wherein the behavior data to be recognized comprises behavior data generated when the object to be recognized performs the interaction operation; and
determining, when the behavior data to be recognized matches preset behavior data, that the object to be recognized is recognized by the vehicle as an authorized object of the vehicle, wherein the preset behavior data comprises behavior data generated when at least one authorized object performs an interaction operation corresponding to at least one piece of preset interaction behavior information.

2. The method according to claim 1, wherein the obtaining interaction behavior information comprises:
obtaining at least one piece of interaction behavior information from the at least one piece of preset interaction behavior information.

3. The method according to claim 1, wherein the behavior data to be recognized comprises behavior data generated when the object to be recognized performs a plurality of interaction operations, and the obtaining and displaying interaction behavior information comprises:
obtaining a plurality of pieces of interaction behavior information; and
displaying the plurality of pieces of interaction behavior information in a preset order to prompt the object to be recognized to perform the plurality of interaction operations in the preset order.

4. The method according to claim 1, wherein the determining, when the behavior data to be recognized matches preset behavior data, that the object to be recognized is recognized by the vehicle comprises:
determining a similarity between the behavior data to be recognized and the preset behavior data; and
determining that the similarity is greater than a preset threshold and that the object to be recognized is recognized by the vehicle as an authorized object of the vehicle.

5. The method according to claim 1, wherein the preset behavior data comprises behavior data generated when a plurality of authorized objects perform the interaction operation corresponding to the at least one piece of preset interaction behavior information, and the determining, when the behavior data to be recognized matches preset behavior data, that the object to be recognized is recognized by the vehicle comprises:
obtaining the preset behavior data;
determining a similarity between behavior data corresponding to each authorized object whose behavior data is collected in the preset behavior data and the behavior data to be recognized, and obtaining a plurality of groups of similarity results; and
determining that a largest similarity result among the plurality of groups of similarity results is greater than a preset threshold and that the object to be recognized is recognized by the vehicle as an authorized object of the vehicle.

6. The method according to claim 5, wherein after the determining that the object to be recognized is recognized by the vehicle, the method further comprises:
determining a vehicle function that an authorized object corresponding to the largest similarity result has permission to use; and
authorizing the object to be recognized to use the vehicle function.

7. An object recognition apparatus(600), wherein the apparatus comprises:
an obtaining module(610) configured to: in response to a trigger signal for obtaining behavior data, obtain and display interaction behavior information, wherein the interaction behavior information is used to prompt an object to be recognized of a vehicle to perform an interaction operation based on the interaction behavior information;
a receiving module(620) configured to receive behavior data to be recognized of the object to be recognized, wherein the behavior data to be recognized comprises behavior data generated when the object to be recognized performs the interaction operation; and
a determination module(630) configured to determine, when the behavior data to be recognized matches preset behavior data, that the object to be recognized is recognized by the vehicle as an authorized object of the vehicle, wherein the preset behavior data comprises behavior data generated when at least one authorized object performs an interaction operation corresponding to at least one piece of preset interaction behavior information.

8. The apparatus according to claim 7, wherein the obtaining module comprises:
a first obtaining sub-module configured to obtain at least one piece of interaction behavior information from the at least one piece of preset interaction behavior information.

9. The apparatus according to claim 7, wherein the behavior data to be recognized comprises behavior data generated when the object to be recognized performs a plurality of interaction operations, and the obtaining module comprises:
a second obtaining sub-module configured to obtain a plurality of pieces of interaction behavior information; and
a display module configured to display the plurality of pieces of interaction behavior information in a preset order to prompt the object to be recognized to perform the plurality of interaction operations in the preset order.

10. The apparatus according to claim 7, wherein the determination module comprises:
a first determination sub-module configured to determine a similarity between the behavior data to be recognized and the preset behavior data; and
a second determination sub-module configured to determine that the similarity is greater than a preset threshold and that the object to be recognized is recognized by the vehicle as an authorized object of the vehicle.

11. The apparatus according to claim 7, wherein the preset behavior data comprises behavior data generated when a plurality of authorized objects perform the interaction operation corresponding to the at least one piece of preset interaction behavior information, and the determination module comprises:
a third obtaining sub-module configured to obtain the preset behavior data;
a third determination sub-module configured to determine a similarity between behavior data corresponding to each authorized object whose behavior data is collected in the preset behavior data and the behavior data to be recognized, and obtain a plurality of groups of similarity results; and
a fourth determination sub-module configured to determine that a largest similarity result among the plurality of groups of similarity results is greater than a preset threshold and that the object to be recognized is recognized by the vehicle as an authorized object of the vehicle.

12. The apparatus according to claim 11, wherein after the fourth determination sub-module, the method further comprises:
a fifth determination sub-module configured to determine a vehicle function that an authorized object corresponding to the largest similarity result has permission to use; and
an authorization module configured to authorize the object to be recognized to use the vehicle function.
